# EUROPEAN PATENT APPLICATION

(11) **EP 4 535 770 A1**
(43) Date of publication of application: **09.04.2025**
(21) Application number: 24204233.1
(22) Date of filing: 02.10.2024
(51) Int. Cl.: H04M 3/523, G10L 21/013

(54) **SYSTEM AND METHOD FOR USING DEEPFAKE AUDIO IN A CALL CENTER**

(30) Priority: 04.10.2023 US 202318376822
(71) Applicant: Mitel Networks Corporation, Ottawa, Ontario K2K 3K1 (CA)
(72) Inventor: PG, Jithin, 680010 Kochi (IN); Braganza, Jonathan, Ottawa, K2E 6P2 (CA); Naidoo, Logendra, Ottawa, K1S 0W8 (CA)
(74) Representative: McDougall, James

(57) **Abstract**

A call center computer system with deepfake audio capability includes a call center server configured to communicate with one or more user devices and route communications from each of the one or more user devices to a call center agent device based on the availability of a call center agent. A deepfake processor in communication with the call center server includes a deepfake audio replicator. A first database includes one or more users and a primary agent associated with each of the one or more users and the content of prior sessions with each of the one or more users. A second database includes voices for each primary agent. The call center server is configured to connect a user device to a device of a secondary agent when the primary agent is not available, and the deepfake processor is configured to substitute the primary agent voice for the secondary agent's voice or to be the voice of a hot.

## Description

### Field

This disclosure relates to primary agent voice replication for an enhanced customer experience.

### Background

In call center environments, a common challenge is calls being disconnected for various reasons, or a customer calling back for follow up or with a different question. Reassignment of a customer to the same agent (referred to herein as a "primary agent" or "original agent") to continue a conversation, or for the customer to sense consistency and continuity in communications when engaging in a new conversation would be advantageous.

Typical problems causing reassignment of a customer to a secondary agent (which is an agent other than the primary agent) include technical, call transmission quality, power outage, simply hanging up by accident, or the customer calling back at a different time to discuss the same or a different issue. The primary agent may not be available for the customer's new call.

Existing call centers have difficulty handling "dropped agent" scenarios or a customer trying to contact an agent with whom he/she is familiar, and either can result in extended wait times and customer frustration. The lack of an effective primary agent reconnection/connection mechanism can burden system resources because information (gathered during the dropped or previous customer session) must be again provided by a customer to a new, i.e., secondary, agent, which reduces the overall quality of service. It also places unnecessary burden on secondary agents as they must orient themselves to the caller's issues. Some examples of systems that reconnect agents are Automatic Call Restoration (ACR) by Cisco and Automatic Call Distribution (ACD) by Mitel, Avaya, and others. ACD and intelligent routing, however, do not include primary agent voice replication.

Some call centers employ centralized knowledge base systems in which agents can access a repository of information about a customer, thus allowing them to retrieve case tracking and prior customer issues. Previous customer interactions and the notes of the agent who handled the interaction are used for customer hand-off to a secondary agent, or to the same primary agent if assigned back to the same customer for the customer's future call. Agents may access this information to understand the context and content of any ongoing issues.

Therefore, an improved system should address the problem of assigning a secondary agent if a call drops, or if a customer simply calls in again and desires to speak to the original (or primary) agent. Such a system and method would optimize customer waiting, reduce overall call-durations, and enhance the customer experience.

### Summary

A first aspect of this disclosure provides a call center computer system with deepfake audio capability, the call center computer system comprising: a call center server configured to communicate with one or more user devices and route communications from each of the one or more user devices to a call center agent device based on the availability of a call center agent associated with the call center agent device, and wherein there are a plurality of call center agents that include at least a primary agent and a secondary agent; a deepfake processor in communication with the call center server, wherein the deepfake processor includes automatic speech recognition (ASR) software and a deepfake audio replicator; a first database of the one or more users and a primary agent associated with each of the one or more users, wherein the first database is in communication with the deepfake processor; and a second database of voices for each primary agent and the content of prior sessions with each of the one or more users and the primary agent associated with each of the one or more users, wherein the second database is in communication with the deepfake processor; wherein when the call center server is configured to connect a user device to a device of the secondary agent when the primary agent is not available, and the deepfake processor is configured to (a) utilize the ASR software to recognize the user's voice, (b) query the first database to identify the primary agent for the user, and (c) using the deepfake audio replicator, substitute the primary agent voice for the secondary agent's voice.

The second database may further include resonant characteristics of the primary agent's voice and the deepfake audio replicator may be further configured to copy the resonant characteristics.

The call center server may be further configured to (a) provide a notification to the user of the utilization of deepfake audio technology prior to the user being connected to a secondary call center agent or an AI bot, and (b) provide an opt-out option for the user in which the deepfake audio technology is not used.

The call center server may be configured to substitute the primary agent voice for each organizational representative.

The content in the second database may include user preferences, user transaction history, and other CRM information.

The deepfake processor may be configured to retrieve the content from the second database and provide the content to the secondary agent or to an AI bot.

The call center computer system may further include a text-to-speech (TTS) engine in communication with the call center server and may be configured to convert text entered on the device of the secondary agent into speech of the primary agent.

A second aspect of this disclosure provides a call center computer method for providing user service utilizing deepfake audio, the computer method comprising the steps of: communicating, via a call center server, with one or more user devices, wherein each of the one or more user devices is associated with a unique user; using an ASR engine to identify each unique user by the unique user's voice; based on the identification of a unique user, the call center server accessing a first database of users and primary agents to identify a primary agent for the unique user; the call center server routing a communication from a device of the unique user to a device of a secondary agent if the primary agent is unavailable; utilizing a deepfake processor in communication with the call center server, wherein the deepfake processor includes a deepfake audio replicator, accessing a second database that includes the primary agent's voice and the content of prior sessions with the unique user and the primary agent; and the deepfake processor, using the deepfake audio replicator, substituting the primary agent voice for the secondary agent's voice during the communication.

The processing by the deepfake processor may further query the second database and analyze the periodic tone, tempo, pronunciation, enunciation, and other voice characteristics specific to the primary agent, all of which are included in the substituted primary agent voice.

The device of the secondary agent may receive from the second database at least some of the content of the primary agent's sessions with the user to assist the secondary agent with continuity in providing user service.

The call center server may be further configured to enable the secondary agent to provide an assistant role during which the secondary agent voice is substituted for the primary agent's voice during the communication.

The method may further include the step of routing the unique user call to an AI bot if the primary agent and the secondary agent are not available, wherein the AI bot is in communication with the deepfake processor and the deepfake audio replicator provides the primary agent's voice to the AI bot.

The method may further include the step of the call center server changing the decibel level of the primary agent voice if the user so selects.

The call center server may detect a duration of a communication and change the deepfake voice at a certain time during the communication.

The method may further comprise the deepfake processor changing the deepfake voice during the communication.

The method may further comprise the deepfake processor storing the communication in the second database and/or the processor providing the generated deepfake audio to the secondary agent.

The method may further comprise the device of the secondary agent or the AI bot receiving from the second database at least some of the content of the primary agent's sessions with the user to assist the secondary agent or the bot with continuity in providing user service.

The method may further comprise the call center server providing the user, the primary agent, or the secondary agent an option to access, utilizing a GUI interface, a database of third-party voices and including a voice characteristic adjuster, VCA, in communication with the deepfake processor

The method may further comprise: (a) using the GUI interface of the user, primary agent, or secondary agent, communicating with the VCA to select a desired voice prosody characteristic(s), and/or (b) the VCA determining a voice prosody characteristic(s) based on the fundamental frequency of the user's voice, and (c) the deepfake processor modifying the primary agent's voice or the third-party voice to have the modified voice prosody characteristic.

A third aspect of this disclosure provides a non-transient computer readable medium comprising program instructions for causing a computer to perform the method of: communicating, via a call center server, with one or more user devices, wherein each of the one or more user devices is associated with a unique user; using an ASR engine in communication with the call center server to identify each unique user by the unique user's voice; based on the identification of a unique user, the call center server accessing a first database of users and primary agents to identify a primary agent for the unique user; the call center server routing a communication from a device of the unique user to a device of a secondary agent or to an AI bot if the primary agent is unavailable; utilizing a deepfake processor in communication with the call center server, wherein the deepfake processor includes a deepfake audio replicator, accessing a second database that includes the primary agent's voice and the content of prior sessions with the unique user and the primary agent; and the deepfake processor, using the deepfake audio replicator, substituting the primary agent voice for the secondary agent's voice or the bot's voice during the communication.

The deepfake processor may change the deepfake voice during the communication.

The deepfake processor may store the communication in the second database.

The processor may be configured to provide the generated deepfake audio to the secondary agent.

The device of the secondary agent or the AI bot may receive from the second database at least some of the content of the primary agent's sessions with the user to assist the secondary agent or the bot with continuity in providing user service.

The call center server may further provide the user, the primary agent, or the secondary agent an option to access, utilizing a GUI interface, a database of third-party voices and includes a voice characteristic adjuster (VCA) in communication with the deepfake processor, and the non-transient computer readable medium may further cause the computer to: (a) using the GUI interface of the user, primary agent, or secondary agent, communicating with the VCA to select a desired voice prosody characteristic(s), and/or (b) the VCA determining a voice prosody characteristic(s) based on the fundamental frequency of the user's voice, and (c) the deepfake processor modifying the primary agent's voice or the third-party voice to have the modified voice prosody characteristic.

### Brief Description of the Drawings

The subject matter of the present disclosure is particularly pointed out and distinctly claimed in this specification. A more complete understanding of the present disclosure, however, may be obtained by referring to the detailed description and claims when considered in connection with the drawing figures, wherein:
FIG. 1 shows an exemplary system according to aspects of this disclosure.
FIG. 2 shows an exemplary method according to aspects of this disclosure.
FIG. 3 shows another exemplary method of this disclosure.
FIG. 4 shows another exemplary method of this disclosure.

It will be appreciated that structures in the figures are illustrated for simplicity and clarity and have not necessarily been drawn to scale. For example, the dimensions of some of the structures in the figures may be exaggerated relative to other structures to help to improve understanding of illustrated embodiments of the present invention.

### Detailed Description

Using a system and method of this disclosure, the primary agent need not be available for a new call because a secondary agent or bot can be assigned to the customer using the primary agent's voice. This is referred to herein as "deepfake audio." The secondary agent or bot can also access knowledge of the particular customer from a database of prior interactions with the customer, plus secondary agents and bots are likely to have sufficient organizational, product, or service knowledge to fill in any informational gaps and handle the customer's issue.

ACD and other known intelligent routing systems focus on routing calls based on predefined agent skills criteria. Using deepfake audio, as this disclosure proposes, introduces the ability to replicate a primary agent's voice. This means that a secondary agent's voice or a bot's voice, by using deepfake audio, mimics the primary agent's voice, including intonation, accent, and speech patterns, making it seem to the customer as if the primary agent is handling the call.

Furthermore, the use of deepfake audio when a customer is assigned to a secondary agent or a bot provides relatively seamless continuity in the customer-agent relationship. By replicating the primary agent's voice, the customer may not even realize he/she is speaking to a secondary agent or bot. This differs from standard ACD and intelligent routing, wherein customers may be aware that they are communicating with a secondary agent or bot. Thus, an attribute of this disclosure is to provide consistency as it reduces disruption when the primary agent is unavailable.

This invention involves the integration of deepfake audio technology with automated call distribution (ACD) and intelligent routing systems to reproduce the voice of a primary agent, enabling a secondary agent (or a bot) to basically mimic the primary agent's voice pitch, tempo, pronunciation, and enunciation (the clarity and precision invested in a word), during customer interactions. By re-creating a primary agent's voice, the method and system of this disclosure provide customer relationship management (CRM) continuity because the customer-agent interactions could otherwise be hampered due to a primary agent's unavailability.

Some opponents to deepfake applications raise ethical and privacy concerns because the technology could be misused for deception if not handled responsibly. However, there are already equivalent trust assumptions in the CRM industry such as the use of bots in chats, wherein customers may unknowingly communicate with a chatbot thinking it is a human. Even in motion pictures, audiences may believe that actors perform stunts, when in fact computer generated imagery (CGI) augments reality because the goal is to entertain. It is widely accepted that no ethical harm occurs when a system is only used in a constructive manner to make customers feel comfortable in a professional environment.

There are also similarities in the ethics posed by notifying a customer that a call may be recorded for training purposes or to assure an appropriate customer service level. Some of these notifications provide the customer an "opt-out" option. Most of the call center industry uses call recording services and most allow call recording for CRM reasons (and even for legal reasons). By providing a customer with an upfront, transparent notification that deepfake audio technology is being used, the customer can make an informed decision and have the option to opt-out and revert to the secondary agent's voice or a bot's voice without deepfake audio augmentation. The opt-out option, however, is not required.

As used herein, the terms application, module, analyzer, engine, and the like can refer to computer program instructions, encoded on computer storage medium for execution by, or to control the operation of, data processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium is non-transitory and can also be, or be included in, one or more separate physical components or media (e.g., solid-state memory that forms part of a device, disks, or other storage devices). In accordance with examples of the disclosure, a non-transient computer readable medium containing program can perform functions of one or more methods, modules, engines and/or other system components as described herein.

As used herein, "engine" refers to a data-processing apparatus, such as a processor, configured to execute computer program instructions, encoded on computer storage medium, wherein the instructions control the operation of the engine. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus.

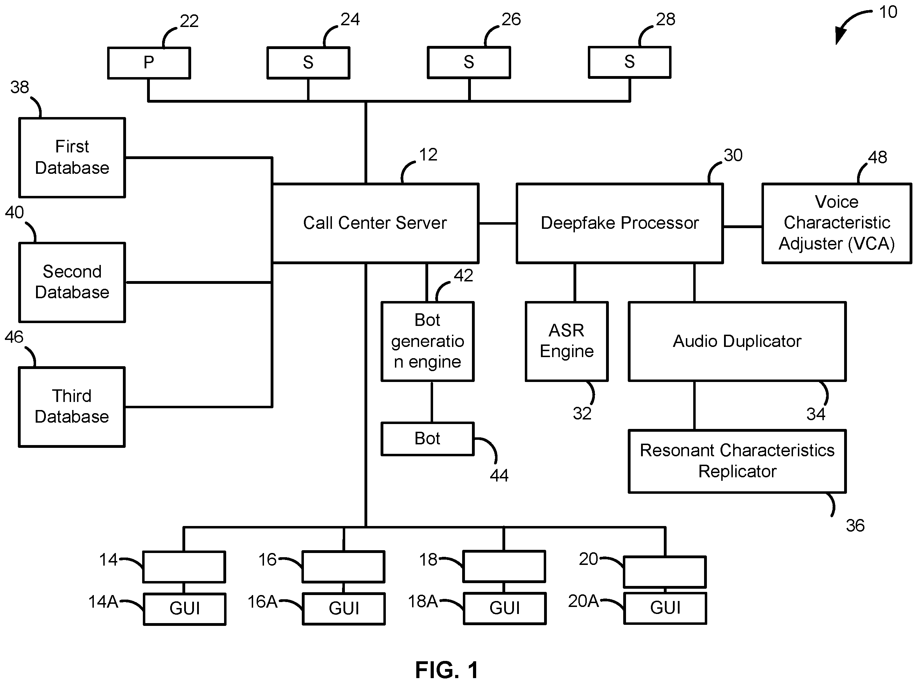

Turning now to the Figures, wherein the purpose is to describe embodiments of this disclosure and not to limit the scope of the claims, FIG. 1 illustrates a system 10 according to this disclosure. System 10 includes a call center server 12 that is configured to communicate with a plurality of customer (or user) devices 14, 16, 18, and 20, each of which has a respective graphical user interface (GUI) 14A, 16A, 18A, and 20A. Call center server 12 is also configured to communicate with one or more agent devices 22, 24, 26, and 28 and to connect a user device to an agent device. One of the agent devices 22 is the device of a primary agent of one of the users, and the other of the agent devices 24, 26, and 28 are devices of secondary agents of the user.

Call center server 12 is also in communication with a deepfake processor 30, which is in communication with an automatic speech recognition (ASR) processor 32, an audio duplicator 34, and a resonant characteristics replicator 36. The audio duplicator 34 and resonant characteristics replicator 36 may be the same device or be separate devices, as shown. Further, either or both may be part of deepfake processor 30, or be separate devices, as shown.

A first database 38 includes the names of users and of each user's primary agent, plus a record of each user's interactions with the call center. A second database 40 includes each primary agent name and the primary agent's voice. A third database 46 includes voices that can be selected by a user. The voices in database 46 can be those of celebrities, politicians, historical persons, random voices with or without accents, agent's voices, or any voices added to the database 46. Each of database 38, 40, and 46 is in communication with call center server 12 and indirectly with deepfake processor 30, although the first database 38, second database 40, and third database 46 could be in direct communication with deepfake processor 30. Further, while shown as being separate databases, any of databases 38, 40, and 46 could be a single database.

A voice characteristic adjuster (VCA) 48 is in communication with the deepfake processor 30, wherein the VCA is configured to select, and/or analyze a user's voice to determine desired voice prosody characteristics that include, but are not limited to, intonation for assertiveness, sternness, calmness, peace, and other vocal qualities.

By communication with the deepfake processor 30, VCA 48 can modify the primary agent's voice or a third-party voice based on the desired voice prosody characteristics, which can be selected by the user, the primary agent, or the secondary agent via a GUI on an agent device 22, 24, 26, 28 or a GUI 14A, 16A, 18A, 20A on respective user devices 14, 16, 18, and 20. The VCA 48 may also, or instead, be configured to change the prosody based on the user's voice. For example, a high and/or rising fundamental frequency (FO) of the user's voice may indicate assertiveness, authority, aggression, confidence, or threat. The VCA 48 can then modify the voice of the primary agent or a third-party voice accordingly.

The modified voice can then be stored in the second database 40 for subsequent retrieval and communications with the user. The VCA can operate in conjunction with the deepfake processor 30 and the ASR engine 32 to develop a desirable voice.

When a secondary agent is not involved, an A.I. system or bot like ChatGPT can directly interact with the user. The bot can utilize the primary agent's voice using deepfake audio technology. A bot-generation engine 42 is in communication with call center server 12 and be used to create a bot 44 to act as a secondary agent. The user history in first database 38 is accessible by the agent devices 22, 24, 26, 28 and by the bot 44 in order to obtain information of prior interactions with a user.

When a user contacts the call center server 12, the ASR 32 identifies the user by his/her voice and queries the first database 38 to determine the user's primary agent. Call center server 12 then determines if the primary agent (here agent P with agent device 22) is available. If the primary agent is not available, the user's call is routed to an available secondary agent using agent device 24, 26, or 28, or routed to bot 44. In either case, deepfake audio technology is utilized to make it sound to the user as if the secondary agent or bot is the primary agent.

Knowing that the call has been (or is being) routed to a secondary agent or bot the call center server 12 accesses the primary agent's speech information from second database 40 or a third-party voice from database 46. The primary agent's, or the third-party's, speech information is transferred to deepfake processor 30, which includes or is connected to ASR processor 32, audio duplicator 34, resonant characteristics replicator 36, and VCA 48, which may or may not be used. The system 10 generates the voice, intonations, and speech patterns of the primary agent or third party and substitutes them for the voice of a secondary agent or bot 44. Additionally, the pitch, tone, or mood of any voice used may be selected to signal traits such as dominance, confidence, agreeability, happiness, deference, politeness, submission, or lack of confidence.

A user can utilize GUI 14A, 16A, 18A, or 20A to select a specific primary agent voice, to opt-out of the deepfake system and hear the voice of a secondary agent or bot 44's computer-generated voice, or to access and select a third-party voice from third database 46.

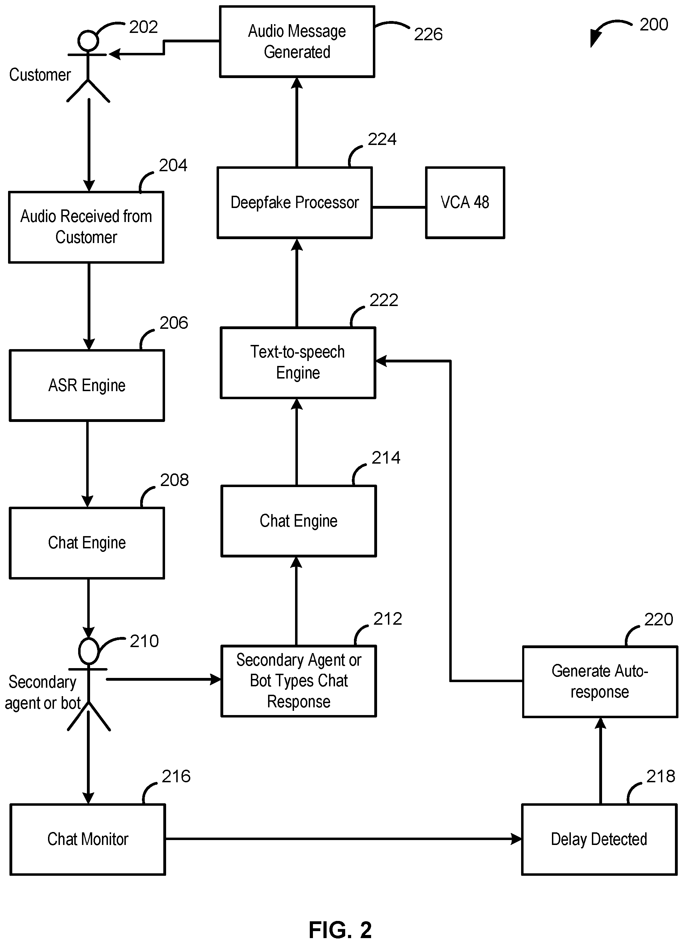

FIG. 2 shows a computer-generated method 200 according to this disclosure. At step 202, a user (in this example the user is a customer) contacts the call center server 12 via an audio call at step 204. At step 206, the ASR engine 32 identifies the user's speech and the first database 38 is accessed to match the user with his/her primary agent. In this example, the secondary agent or bot 44 at step 210 receive the user's speech as text generated at step 208 by a chat engine. The secondary agent or bot 44 then enters, such as by typing or automatically generating (if a bot), a text response at step 212 which is transmitted at step 214 by the chat engine to text-to-speech engine 222. At step 224, the deepfake processor 30, which may be in communication with VCA 48, substitutes the voice of the primary agent for speech from the text-to-speech engine. If VCA 48 is utilized, a prosody can be selected and/or modified as the communication with the user progresses, as explained herein. An audio message using the primary agent's voice is generated at step 226 and sent to the user.

An alteration is shown in steps 216, 218, and 220. At step 216, a chat monitor checks the secondary agent's or bot 44's response. If a delay is detected at step 218, the system and method of this disclosure may generate an automatic response, such as "I'm still looking, please wait a minute" or "I'm still checking" to let the user know that the secondary agent or bot 44 is still active. In each scenario described herein, a secondary agent, bot 44, or the primary agent, can access the user history in first database 38 to further assist in determining the user's prior issues.

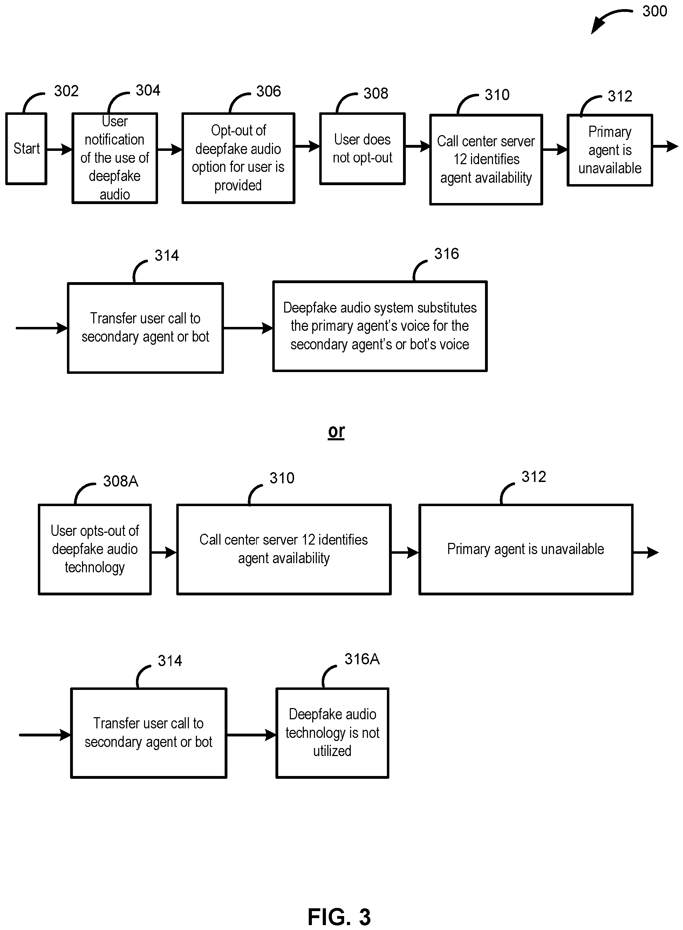

Another method 300 is illustrated in FIG. 3. The method starts at step 302.

At step 304, the user is notified that deepfake audio is being used. For example, the user may hear the following message: "Please be aware that this call may utilize DeepCRM augmentation to enrich your customer experience." At step 306, the user has the option to opt-out of using deepfake audio. Assuming that the user does not opt-out at step 308, the call center server 12 identifies agent availability at step 310.

If the primary agent is unavailable (step 312), the user call is transferred to a secondary agent or bot at step 314. Deepfake audio technology is used to substitute the primary agent's voice at step 316, which involves analyzing and copying resonant characteristics of the primary agent's voice, which allows for continuity in customer service.

Alternatively, at step 308A, the user opts-out of the use of deepfake audio. Steps 310, 312, and 314 are repeated, wherein the call center server identifies agent availability, the primary agent is unavailable, and the user's call is transferred to a secondary agent or bot 44. But, in this scenario, deepfake audio is not utilized at step 316A.

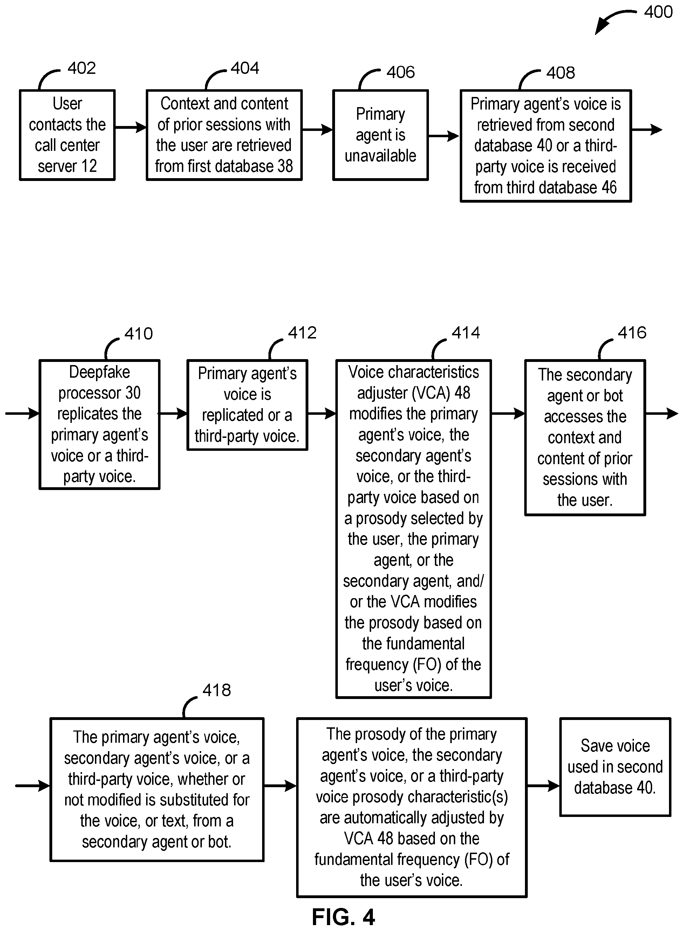

Another method 400 showing a possible sequencing of events regarding deepfake audio are shown in FIG. 4, which illustrates other method steps that, if suitable, may be used with method 200 or method 300.

At step 402, the user contacts the call center server 12. At step 404, the relevant context and content of the primary agent's prior sessions with the user are retrieved from first database 38. The relevant context and content includes previous interactions, customer preferences, transaction history, or any other relevant information stored in the CRM system.

At step 406, the call center server 12 determines that the primary agent is unavailable. At step 408, the primary agent's voice is retrieved from second database 40. At step 410, the deepfake processor 30 generates deepfake audio closely resembling the primary agent's voice, as previously discussed herein. The deepfake audio technology analyzes and mimics the periodic tone, tempo (rapidity), pronunciation, enunciation, and other voice characteristics specific to the primary agent.

At step 412, the system 10 provides the generated deepfake audio to the secondary agent or bot who will be handling the user interaction. At step 416, the secondary agent or bot accesses the content and context of the primary agent's prior sessions with the user, or of all agents' and bots' prior sessions with the user, to help with a smooth transition and continuity in the conversation with the user. The system 10 and method 400 may employ a TTS (text-to-speech) and ASR (automatic speech recognition) component.

At steps 408-412, the user can also select a voice, such as an actor's voice, a politician's, an historical figure's, or any third-party voice, such as a voice of a voice actor, stored in a third database 46 of system 10. The third-party voice could be selected for any reason, such as to project a sense of calm, confidence, assertiveness, authority, trust, or simply for fun.

Possible variations to this disclosure include allowing the secondary agent's voice to provide greater, intelligible assistance in a target language by resolving linguistic-intelligibility factors if the secondary agent's accent is too strong for a non-native speaking user. Further, the secondary agent could use his/her voice in addition to using the primary agent's deepfake audio voice to make it seem as if the secondary agent is acting as an assistant to the primary agent.

At step 418, deepfake audio of the primary agent is generated by the system modelling the primary agent's voice so that the secondary agent or bot has his/her output synthesized.

At step 414, VCA 48 is in communication with the deepfake processor 30 and desired voice prosody characteristics may be selected by the user, the primary agent, or the secondary agent using an interface such as a GUI on an agent device 22, 24, 26, 28 or a GUI 14A, 16A, 18A, 20A or respective user devices 14, 16, 18, and 20. The prosody characteristics include, but are not limited to, intonation for assertiveness, sternness, calmness, peace, and other vocal qualities. By communication with deepfake processor 30, the primary agent's voice or a third-party voice can be modified based on the desired voice prosody characteristics. The VCA 48 can operate separately, or in conjunction with the deepfake processor 30 and the ASR engine 32 to develop a desirable voice. Or the VCA 48 may not be used.

The voice used by method 400 to communicate with the user may also be modified automatically and continuously by VCA 48 based on the FO of the user's voice, as described herein.

The modified voice can then be stored in the second database 40 for subsequent retrieval and communications with the user, perhaps based on a customer relationship management (CRM) profile associated with the user.

While this application is not directly related to customer service, the invention demonstrates the use of voice replication for personal reasons and maintaining one's identity to ensure customer satisfaction, which is next-level as CRM potential goes.

The description of embodiments provided herein is merely exemplary and is intended for purposes of illustration only; the following description is not intended to limit the scope of the claims. Moreover, recitation of multiple embodiments having stated features is not intended to exclude other embodiments having additional or fewer features or other embodiments incorporating different combinations of the stated features. The methods and systems according to this disclosure and claims can operate in a premise, cloud-based, or hybrid environment.

The features of the various embodiments may be stand alone or combined in any combination. Further, unless otherwise noted, various illustrated steps of a method can be performed sequentially or at the same time, and not necessarily be performed in the order illustrated. It will be recognized that changes and modifications may be made to the exemplary embodiments without departing from the scope of the present invention. These and other changes or modifications are intended to be included within the scope of the present invention, as expressed in the following claims.

## Claims

1. A call center computer system with deepfake audio capability, the call center computer system comprising:
a call center server configured to communicate with one or more user devices and route communications from each of the one or more user devices to a call center agent device based on the availability of a call center agent associated with the call center agent device, and wherein there are a plurality of call center agents that include at least a primary agent and a secondary agent.
a deepfake processor in communication with the call center server, wherein the deepfake processor includes automatic speech recognition (ASR) software and a deepfake audio replicator;
a first database of the one or more users and a primary agent associated with each of the one or more users, wherein the first database is in communication with the deepfake processor; and
a second database of voices for each primary agent and the content of prior sessions with each of the one or more users and the primary agent associated with each of the one or more users, wherein the second database is in communication with the deepfake processor;
wherein the call center server is configured to connect a user device to a device of the secondary agent when the primary agent is not available, and the deepfake processor is configured to (a) utilize the ASR software to recognize the user's voice, (b) query the first database to identify the primary agent for the user, and (c) using the deepfake audio replicator, substitute the primary agent voice for the secondary agent's voice.

2. The call center computer system of claim 1, wherein the second database further includes resonant characteristics of the primary agent's voice and the deepfake audio replicator is further configured to copy the resonant characteristics.

3. The call center computer system of claim 1 or claim 2, wherein the call center server is further configured to (a) provide a notification to the user of the utilization of deepfake audio technology prior to the user being connected to a secondary call center agent or an AI bot, and (b) provide an opt-out option for the user in which the deepfake audio technology is not used.

4. The call center computer system of any preceding claim, wherein the call center server is configured to substitute the primary agent voice for each organizational representative.

5. The call center computer system of any preceding claim, wherein the content in the second database includes user preferences, user transaction history, and other CRM information and optionally wherein the deepfake processor is configured to retrieve the content from the second database and provide the content to the secondary agent or to an AI bot.

6. A call center computer method for providing user service utilizing deepfake audio, the computer method comprising the steps of:
communicating, via a call center server, with one or more user devices, wherein each of the one or more user devices is associated with a unique user;
using an ASR engine to identify each unique user by the unique user's voice;
based on the identification of a unique user, the call center server accessing a first database of users and primary agents to identify a primary agent for the unique user;
the call center server routing a communication from a device of the unique user to a device of a secondary agent or to an AI bot if the primary agent is unavailable;
utilizing a deepfake processor in communication with the call center server, wherein the deepfake processor includes a deepfake audio replicator, accessing a second database that includes the primary agent's voice and the content of prior sessions with the unique user and the primary agent; and
the deepfake processor, using the deepfake audio replicator, substituting the primary agent voice for the secondary agent's voice during the communication.

7. The call center computer method of claim 6, wherein the processing by the deepfake processor further comprises querying the second database and analyzing the periodic tone, tempo, pronunciation, enunciation, and other voice characteristics specific to the primary agent, all of which are included in the substituted primary agent voice.

8. The call center computer method of claim 6 or claim 7, further comprising the call center server enabling the secondary agent to provide an assistant role during which the secondary agent voice is substituted for the primary agent's voice during the communication.

9. The call center computer method of any of claims 6 to 8 that further includes the step of routing the unique user call to an AI bot if the primary agent and the secondary agent are not available, wherein the AI bot is in communication with the deepfake processor and the deepfake audio replicator providing the primary agent's voice to the AI bot.

10. The call center computer method of any of claims 6 to 9 that further includes the step of the call center server:
changing the decibel level of the primary agent voice if the user so selects; and/or. detecting a duration of a communication and changing the deepfake voice at a certain time during the communication.

11. The call center computer method of any of claims 6 to 10, further comprising the deepfake processor changing the deepfake voice during the communication.

12. The call center computer method of any of claims 6 to 11, further comprising the deepfake processor storing the communication in the second database and/or the processor providing the generated deepfake audio to the secondary agent.

13. The call center computer method of any of claims 6 to 12, comprising the device of the secondary agent or the AI bot receiving from the second database at least some of the content of the primary agent's sessions with the user to assist the secondary agent or the bot with continuity in providing user service.

14. The call center computer method of any of claims 6 to 13, comprising the call center server further providing the user, the primary agent, or the secondary agent an option to access, utilizing a GUI interface, a database of third-party voices and including a voice characteristic adjuster, VCA, in communication with the deepfake processor, and the method further comprising: (a) using the GUI interface of the user, primary agent, or secondary agent, communicating with the VCA to select a desired voice prosody characteristic(s), and/or (b) the VCA determining a voice prosody characteristic(s) based on the fundamental frequency of the user's voice, and (c) the deepfake processor modifying the primary agent's voice or the third-party voice to have the modified voice prosody characteristic.

15. A non-transient computer readable medium comprising program instructions for causing a computer to perform the method of any of claims 6 to 14.
